# EUROPEAN PATENT APPLICATION

(11) **EP 3 955 437 A1**
(43) Date of publication of application: **16.02.2022**
(21) Application number: 20190875.3
(22) Date of filing: 13.08.2020
(51) Int. Cl.: H02K 15/02

(54) **A METHOD FOR MANUFACTURING A ROTOR CORE OR A STATOR CORE OF AN ELECTRIC MOTOR**

(71) Applicant: KONE Corporation, 00330 Helsinki (FI)
(72) Inventor: WENLIN, Henri, 00330 HELSINKI (FI); ALKULA, Petri, 00330 HELSINKI (FI); HURRI, Lasse, 00330 HELSINKI (FI); RANTA, Leena, 00330 HELSINKI (FI); BURAKOV, Andrej, 00330 HELSINKI (FI); RILLA, Marko, 00330 HELSINKI (FI); PIRHONEN, Tommi, 00330 HELSINKI (FI)
(74) Representative: Berggren Oy

(57) **Abstract**

The invention relates to a method for manufacturing a rotor core or a stator core (205) of an electric motor. The method comprises preparing (110) a continuous strip pattern (202) from an electrical sheet (200). The continuous strip pattern (202) comprises structural features (204, 206) of the rotor core or the stator core (205). The method further comprises applying (120) an adhesive (208) along at least part of a first side of the continuous strip pattern (202) and reeling up (130) the continuous strip pattern (202) to a spiral to form the stator core or the rotor core (205). The invention relates also to an electric motor comprising a rotor core and/or a stator core (205) obtainable by the method, an elevator hoisting machine comprising the electric motor, and an elevator comprising the elevator hoisting machine.

## Description

### TECHNICAL FIELD

The invention concerns in general the technical field of stator cores and/or rotor cores of electric motors. Especially the invention concerns manufacturing rotor cores and/or stator cores of electric motors.

### BACKGROUND

Traditionally, laminated stator cores and/or rotor cores of electrical motors are made of electrical steel sheets. Plurality of separate steel sheets are stacked and welded together to form a solid stator core or a solid rotor core. Welding is affecting negatively magnetic properties of the electrical steel sheets. Welding may also cause short circuits between adjacent steel sheets, providing routes for undesired eddy currents in switching magnetic flux. This may reduce efficiency of the electrical motors.

The electrical motors, in particular permanent magnet motors, may be used for example as hoisting motors in elevator hoisting machines. Such hoisting motors may be subject to high forces and vibrations caused by moving elevator masses. Therefore, good stiffness and vibration damping properties are looked for.

Moreover, in some elevators substantially flat elevator hoisting motors may be used. An especially space-efficient solution may be achieved when the flat hoisting motor is located between an elevator hoistway wall and a guide rail of an elevator car and/or an elevator counterweight. It would be beneficial to improve stiffness and/or vibration properties especially of such flat hoisting motors.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method for manufacturing a rotor core or a stator core of an electric motor, an electric motor, a hoisting machine, and an elevator. Another objective of the invention is that the method manufacturing a rotor core or a stator core of an electric motor, the electric motor, the hoisting machine, and the elevator enables to achieve an electrical motor with improved reliability and mechanical vibration properties.

The objectives of the invention are reached by a method, an electric motor, a hoisting machine, and an elevator as defined by the respective independent claims.

According to a first aspect, a method for manufacturing a rotor core or a stator core of an electric motor is provided, wherein the method comprises: preparing a continuous strip pattern from an electrical sheet, the continuous strip pattern comprises structural features of the rotor core or the stator core; applying an adhesive along at least part of a first side of the continuous strip pattern; and reeling up the continuous strip pattern to a spiral to form the stator core or the rotor core.

The preparing of the continuous strip pattern may comprise punching or laser cutting the electrical sheet.

The continuous strip pattern may comprise the structural features of the rotor core or the stator core of an axial electric motor.

Alternatively, the continuous strip pattern may comprise the structural features of the rotor core or the stator core of a radial electric motor.

The adhesive may be applied substantially all over the first side of the continuous strip pattern.

Alternatively, the adhesive may be applied at selected locations along the continuous strip pattern.

Alternatively or in addition, the electrical sheet may comprise a separate isolation layer, wherein the method may further comprise applying an activator along at least part of a second side of the continuous strip pattern.

The activator may be applied with a spray valve.

The adhesive may be applied with a pump dispenser comprising a dispense valve.

The adhesive may be an anaerobic adhesive.

The electrical sheet may be an electrical steel sheet or a soft magnetic compound (SMC).

A radial width of the rotor core or the stator core may be substantially larger than an axial length of the rotor core or the stator core.

According to a second aspect, an electric motor is provided, wherein the electrical motor comprises a rotor core and/or a stator core obtainable by the method as described above.

According to a third aspect, an elevator hoisting machine is provided, wherein the elevator hoisting machine comprises the electric motor as described above.

According to a fourth aspect, an elevator is provided, wherein the elevator comprises the elevator hoisting machine as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a method according to the invention.
Figures 2A-2K illustrate schematically examples of a rotor core or a stator core at different manufacturing steps according to the invention.
Figure 3 illustrates schematically another example of a method according to the invention.
Figure 4 illustrates schematically a simple example implementation of a manufacturing method according to the invention for manufacturing a rotor core or a stator core of an axial electric motor.

### DESCRIPTION OF THE EXEMPLIFYING EMBODIMENTS

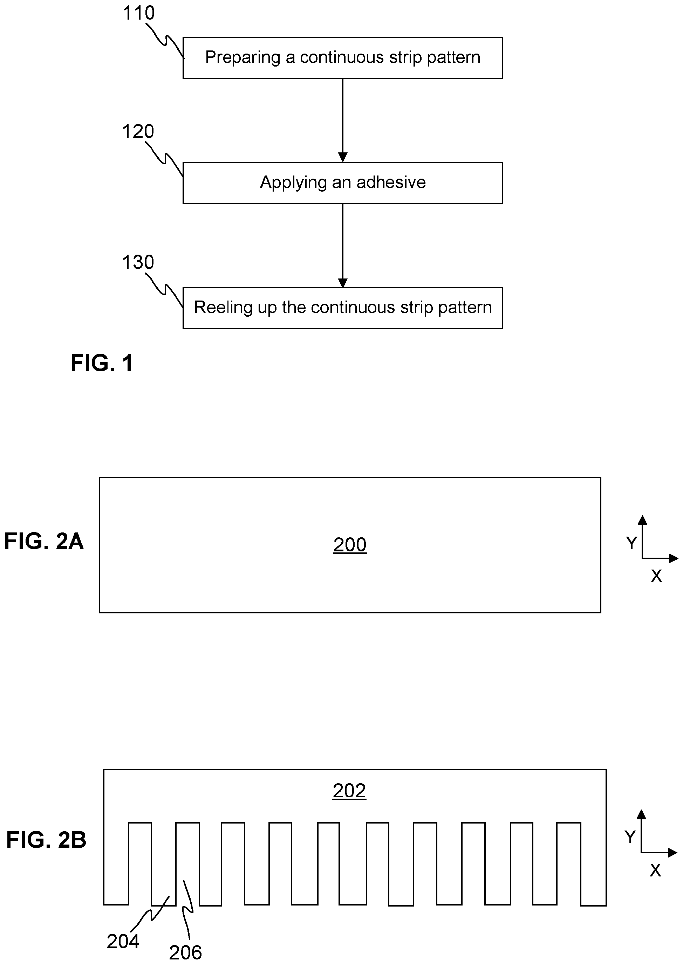

Figure 1 illustrates schematically an example of a method, i.e. a process, according to the invention for manufacturing a rotor core or a stator core of an electric motor. Figure 1 illustrates the example of the method as a flow chart. Figures 2A-2K illustrate schematically examples of the rotor/stator core 205 at different manufacturing steps, i.e. phases. The dimensions of structures in Figures 2A-2K are not to scale.

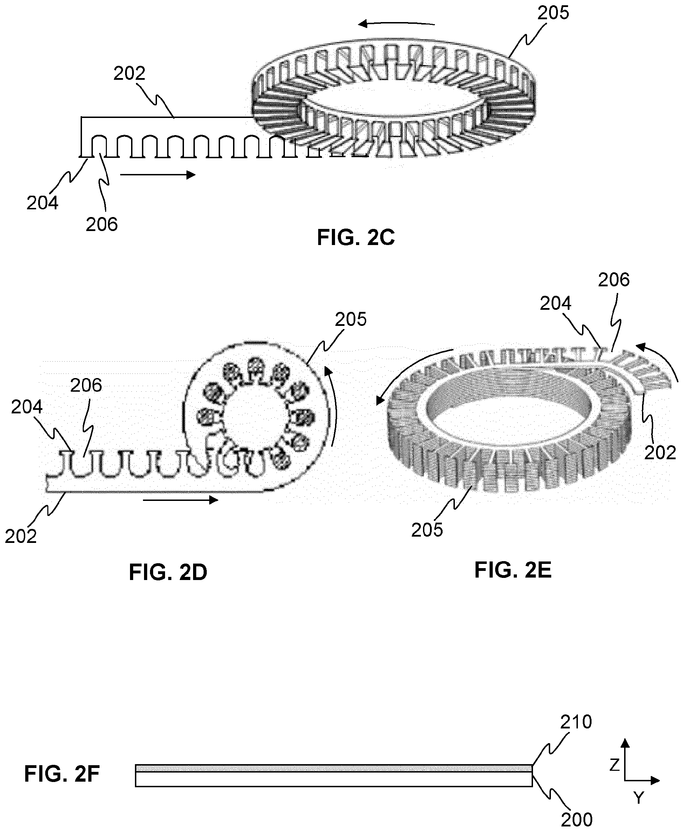

At a step 110, a continuous strip pattern 202 is prepared from an electrical sheet 200. Figure 2A illustrates an example of the electrical sheet 200. Figure 2A is a top view of the example of the electrical sheet 200. The electrical sheet 200 is continuous and Figure 2A illustrates only a part of the electrical sheet 200 in the length direction, i.e. in the direction of the x-axis. The electrical sheet 200 may preferably be an electrical steel sheet. Alternatively, the electrical sheet 200 may be a soft magnetic compound (SMC) sheet. Figure 2B illustrates an example of the continuous strip pattern 202 prepared from the electrical sheet 200. Figure 2B is a top view of the example of the continuous strip pattern 202. Figure 2B illustrates only a part of the continuous strip pattern 202 in the length direction, i.e. in the direction of the x-axis. The continuous strip pattern 202 comprises structural features 204, 206 of the rotor core or the stator core 205. In other words, continuous strip pattern 202 is formed by the structural features 204, 206 of the rotor core or the stator 205. The structural features 204, 206 may be produced to the electrical sheet 200 to form the continuous strip pattern 202, in the length direction, i.e. in the direction of the x-axis. The structural features 204, 206 may comprise e.g. a plurality of teeth 204, a plurality of slots 206 between the teeth 204, and/or any other structural features for forming the intended shape of the stator core or the rotor core 205, e.g. a plurality of slots or voids for permanent magnets. In Figure 2B only one non-limiting example shape of the structural features 204, 206 is illustrated, and the structural features 204, 206 may have any other shape and thus form any other shape continuous strip pattern 202 and the stator core or the rotor core 205. In Figures 2C-2E other non-limiting example shapes of the structural features 204, 206 are illustrated.

According to an exemplifying embodiment of the invention, the continuous strip pattern 202 may comprise the structural features 204, 206 of the rotor core or the stator core 205 of an axial electric motor. In other words, the structural features 204, 206, e.g. teeth and slots, of the rotor core or the stator core 205 are such that the rotor core or the stator core 205 may be implemented in the axial electric motor. According to another exemplifying embodiment of the invention, the continuous strip pattern 202 may comprise the structural features 204, 206 of the rotor core or the stator core 205 of a radial electric motor. In other words, the structural features 204, 206, e.g. teeth and slots, of the rotor core or the stator core 205 are such that the rotor core or the stator core 205 may be implemented in the radial electric motor.

According to an exemplifying embodiment of the invention, the preparing of the continuous strip pattern 202 may comprise punching the electrical sheet 200. In other words, the structural features 204, 206 may be punched to the electrical sheet 200 to form the continuous strip pattern 202. According to another exemplifying embodiment of the invention, the preparing of the continuous strip pattern 202 may comprise laser cutting the electrical sheet 200. In other words, the structural features 204, 206 may be laser cut to the electrical sheet 200 to form the continuous strip pattern 202.

At a step 120, an adhesive 208 is applied along at least part of a first side of the continuous strip pattern 202. Alternatively or in addition, in some embodiments, the adhesive 208 may be applied along at least part of both sides of the continuous strip pattern 202. The adhesive 208 may be applied e.g. with a pump dispenser 404 comprising a dispense valve. Instead of the pump dispenser 404, for example a brush or a roller may be used for applying the adhesive 208. According to an example the adhesive 208 may be an anaerobic adhesive, e.g. an anaerobic adhesive comprising urethane methacrylate acrylic, such as Loctite 648 or any other similar anaerobic adhesive. Instead of the above-mentioned adhesives, many other adhesives applicable for metals are suitable for gluing the strip pattern 202 as well at the step 120.

At a step 130, the continuous strip pattern 202 is reeled, i.e. rolled, to a spiral to form, i.e. establish, the stator core or the rotor core 205. When the continuous strip pattern 202 is reeled, the adhesive 208 hardens to establish stiff rotor core or stator core 205. In other words, in the reeling step 130 adjacent rounds, i.e. layers or laminations, of the continuous strip pattern 202 are stacked together to form the final stator core or the final rotor core 205. Moreover, in the reeling step 130, the structural features 204, 206 forming the pattern of the continuous strip pattern 202 are stacked together to form the structural features 204, 206 of the final reeled stator core or final reeled rotor core 205. Figure 2C illustrates schematically an example of reeling 130 the stator core 205 of an axial electric motor. Figures 2D and 2E in turn illustrate schematically examples of reeling 130 the stator core 205 of a radial inner-rotor electric motor. For sake of clarity the adhesive 208 is not in Figures 2C-2E. The steps 110-130 of the manufacturing method according to the invention may be implemented in the manufacturing of an axial electric motor and in the manufacturing of a radial electric motor otherwise similarly, except the continuous strip pattern 202 prepared at the step 110 may comprise the structural features 204, 206 suitable for the rotor core or the stator core 205 of the axial electric motor or suitable for the rotor core or the stator core 205 of the radial electric motor and at the step 130 the reeling direction of the continuous strip pattern 202 is different for the axial electric motor and for the radial electric motor.

According to an exemplifying embodiment of the invention, the electrical sheet 200 may comprise a separate isolation layer 210, i.e. a layer that provides an electrical isolation between adjacent rounds of the continuous strip pattern 202 in the reeled rotor core or stator core. The isolation layer 210 may be a pigmented coating applied to the surface of electrical steel sheet 200 during manufacturing process of the electrical sheet 200. The electrical sheet 200 comprising the isolation layer 210 may then be used to form the continuous strip pattern 202 as described above. Therefore, one preferable property of the isolation layer 210 of the electrical sheet 200 may be that the isolation layer 210 is suitable for punching to enable that the structural features 204, 206 may be punched to the electrical sheet 200 to form the continuous strip pattern 202. The isolation layer 201 may be based on alkyl, melamine, epoxy, polyurethane and/or phosphates for example. Figure 2F illustrates schematically an end view of an example of the electrical sheet 200 comprising the separate isolation layer 210 arranged on the first side of the electrical sheet 200. Alternatively or in addition, the separate isolation layer 210 may be arranged on a second side of the electrical sheet 200. Alternatively, the electrical sheet 200 does not comprise any separate isolation layer 210.

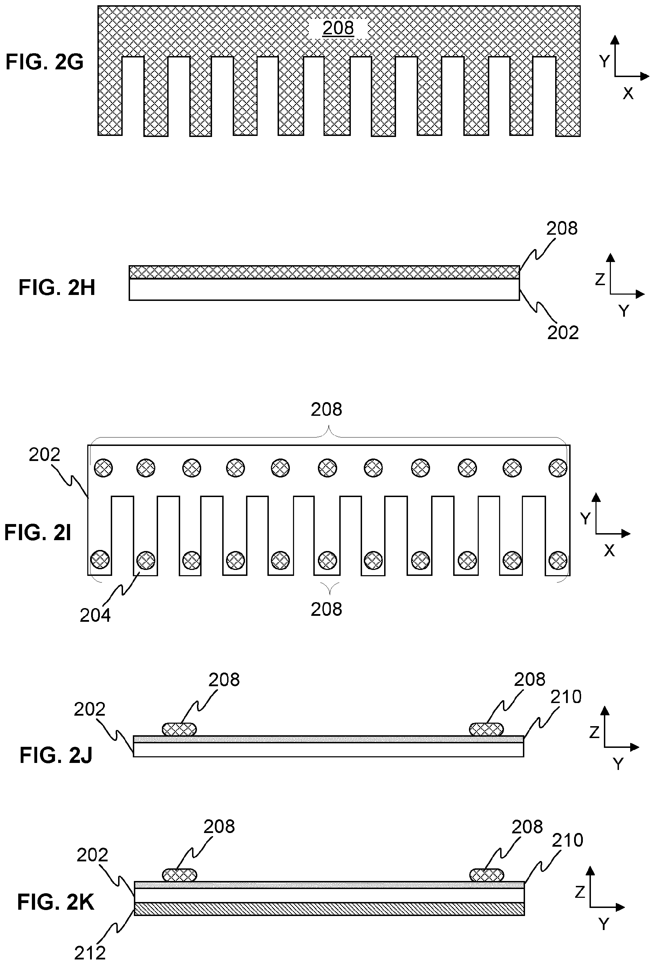

According to an exemplifying embodiment of the invention, the adhesive 208 may be applied at the step 120 substantially all over the first side of the continuous strip pattern 202 as illustrated in examples of Figures 2G and 2H. Figure 2G illustrates schematically a top view of an example of the continuous strip pattern 202 having the adhesive 208 applied substantially all over the first side of the continuous strip pattern 202. Figure 2H illustrates schematically an end view of an example of the continuous strip pattern 202 having the adhesive 208 applied substantially all over the first side of the continuous strip pattern 202. Applying the adhesive 208 substantially all over the first side of the continuous strip pattern 202 is especially advantageous when the electrical sheet 200 does not comprise the separate isolation layer 210. In that case, the adhesive 208 provides the electrical isolation between the adjacent rounds of the continuous strip pattern 202. However, the invention is not limited to that and the adhesive 208 may be applied all over the first side of the continuous strip pattern 202 even if the electrical sheet 200 comprises the separate isolation layer 210.

Alternatively, according to another exemplifying embodiment of the invention, the adhesive 208 may be applied at the step 120 at selected locations, i.e. spots, along the first side of the continuous strip pattern 202 as illustrated in the examples of Figures 2I and 2J. Figure 2I illustrates schematically a top view of an example of the continuous strip pattern 202 having the adhesive 208 applied at the selected locations along the first side of the continuous strip pattern 202. Figure 2J illustrates schematically an end view of an example of the continuous strip pattern 202 having the adhesive 208 applied at the selected locations along the first side of the continuous strip pattern 202. The locations of the plurality of spots along the first side of the continuous strip pattern 202 may be substantially freely selected. Preferably at least some of the plurality of spots are located on the teeth 204 of the continuous strip pattern 202 to affix substantially tight structural features 204, 206, e.g. the teeth 204, of the adjacent rounds of the continuous strip pattern 202. This is especially advantageous, when the electrical sheet 200 comprises the separate isolation layer 210, e.g. on the first side of the electrical sheet 200, i.e. the isolation layer 210 of the electrical sheet 200 is between the adhesive 208 at selected locations and the first side of the continuous strip pattern 202. However, the invention is not limited to that and the adhesive 208 may be applied only at the selected locations along the first side of the continuous strip pattern 202 even if the electrical sheet 200 does not comprise the separate isolation layer 210.

According to an exemplifying embodiment of the invention, when the electrical sheet 200 comprises the separate isolation layer 210 on the first side of the electrical sheet 200, the method may further comprise applying an activator 212 along at least part of a second side of the continuous strip pattern 202. Figure 2K illustrates schematically an end view of an example of the continuous strip pattern 202 comprising also the activator 212 applied substantially all over the second side of the continuous strip pattern 202. The activator 212 may be applied substantially all over the second side of the continuous strip pattern 202 as illustrated in the example of Figure 2K. Alternatively, the activator 212 may be applied at selected locations, i.e. spots, along the second side of the continuous strip pattern 202.

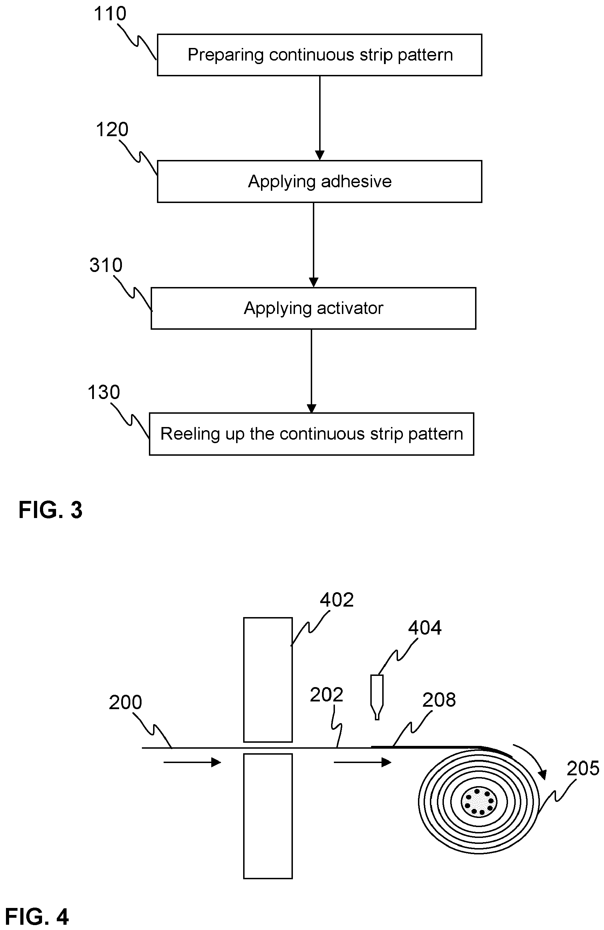

Figure 3 illustrates schematically an example of the method according to the invention as a flow chart, wherein the method comprises the optional step 310 of applying the activator 212. In the example of Figure 3 the activator 212 is applied after applying the adhesive 208 at the step 120. Alternatively, the activator 212 may be applied before applying the adhesive 208 or substantially simultaneously with applying the adhesive 208. Preferably, the adhesive 208 may be applied at the selected locations along the first side of the continuous strip pattern 202 as illustrated in the example of Figure 2K. However, the invention is not limited to that and the adhesive 208 may also be applied substantially all over the first side of the continuous strip pattern 202. The activator 212 enables that a decent holding force between adjacent rounds may be achieved despite of the separate isolation layer 210 of the electrical sheet 200. Moreover, the use of the activator 212 improves the stiffness of the rotor core or the stator core. The activator 212 may be applied e.g. with a spray valve. According to an example, the activator 212 may be monomer-based activator, i.e. primer. The activator 212 may for example be especially intended for anaerobic adhesives, such as Loctite SF 7091 or any other similar activator.

Figure 4 illustrates schematically a simple example implementation of the manufacturing method according to the invention. In Figure 4 an example of manufacturing a rotor core or a stator core 205 of an axial electric motor is illustrated. However, the manufacturing method according to the invention may also be implemented in manufacturing a rotor core or a stator core 205 of a radial electric motor as discussed above. In the example of Figure 4 the electrical sheet 200 is fed to a punching device 402 configured to punch the structural features 204, 206 to the electrical sheet 200 to prepare, i.e. form the continuous strip pattern 202. Alternatively, the continuous strip pattern 202 may be prepared, i.e. formed, from the electrical sheet 200 with a laser device configured to laser cut the structural features 204, 206 to the electrical sheet 200 to form the continuous strip pattern 202 as discussed above. Next in the example of Figure 4 the adhesive 208 is applied along at least part of the first side of the continuous strip pattern 202 with the pump dispenser 404. The adhesive 208 may be applied substantially all over the first side of the continuous strip pattern 202 or at the selected locations along the first side of the continuous strip pattern 202 as discussed above. Finally, in the example of Figure 4 the continuous strip pattern 202 is reeled up to the spiral to form the stator/rotor core 205. For sake of clarity the structural features 204, 206 are not shown in Figure 4 neither in the continuous strip pattern 202 nor in the final reeled stator/rotor core 205. Figure 4 illustrates only one example implementation of the method according to the invention and the method may comprise one or more embodiments of the invention described above, e.g. the electrical sheet 200 may comprise the separate isolation layer 210 and/or the activator 212 may be applied along at least part of the second side of the continuous strip pattern 202.

According to an exemplifying embodiment of the invention, a radial width of the rotor core or the stator core 205 obtained with the above described method according to the invention described above may substantially be larger than an axial length of the rotor core or the stator core 205, i.e. the rotor core or the stator core 205 is substantially flat in its dimensions, to be suitable for a flat elevator hoisting machine.

The invention is described above referring to the method for manufacturing a rotor core or a stator core 205 of an electric motor. However, the invention relates also to an electric motor comprising a rotor core and/or a stator core 205 obtainable with the method as described above.

Furthermore, the invention relates also to an elevator hoisting machine comprising the electric motor comprising the rotor core and/or the stator core 205 obtainable with the method as described above. The elevator hoisting machine may be flat, wherein the radial width of the rotor core or the stator core 205 obtained with the above described method may be substantially larger than the axial length of the rotor core or the stator core 205. The flat elevator hoisting machine may be located between a hoistway wall and a guide rail of an elevator car or an elevator counterweight. Preferably, the elevator hoisting machine comprises an axial electric motor, in particular an axial permanent magnet motor.

Moreover, the invention relates also to an elevator comprising the elevator hoisting machine comprising the electric motor comprising the rotor core and/or the stator core 205 obtainable with the method as described above.

At least some of the above described embodiments of the invention enable elimination of loose adjacent rounds, i.e. laminations, of the rotor core or the stator core 205. This improves the stiffness and tightness of the stator core structure or the rotor core structure, which in turn causes higher resonance frequency and less vibration of the electric motor. Moreover, a higher stacking factor may be achieved, which enables reduction on material and thus improved energy transfer. Moreover, the invention as described above reduces the process time, because welding is not needed. Because the welding is not needed, there is no bending caused by the welding, which enables improved shape of the rotor core or the stator core 205. Moreover, all other disadvantages, e.g. short circuits, eddy currents, and/or negative effects on the magnetic properties of the electrical sheet 200, caused by the welding may be avoided.

The specific examples provided in the description given above should not be construed as limiting the applicability and/or the interpretation of the appended claims. Lists and groups of examples provided in the description given above are not exhaustive unless otherwise explicitly stated.

## Claims

1. A method for manufacturing a rotor core or a stator core (205) of an electric motor, the method comprising:
preparing (110) a continuous strip pattern (202) from an electrical sheet (200), the continuous strip pattern (202) comprises structural features (204, 206) of the rotor core or the stator core (205);
applying (120) an adhesive (208) along at least part of a first side of the continuous strip pattern (202); and
reeling up (130) the continuous strip pattern (202) to a spiral to form the stator core or the rotor core (205).

2. The method according to claim 1, wherein the preparing (110) of the continuous strip pattern (202) comprises punching or laser cutting the electrical sheet (200).

3. The method according to any of the preceding claims, wherein the continuous strip pattern (202) comprises the structural features (204, 206) of the rotor core or the stator core (205) of an axial electric motor.

4. The method according to any of claims 1 or 2, the continuous strip pattern (202) comprises the structural features (204, 206) of the rotor core or the stator core (205) of a radial electric motor.

5. The method according to any of the preceding claims, wherein the adhesive (208) is applied substantially all over the first side of the continuous strip pattern (202).

6. The method according to any of claims 1 to 4, wherein the adhesive (208) is applied at selected locations along the continuous strip pattern (202).

7. The method according to any of the preceding claims, wherein the electrical sheet (200) comprises a separate isolation layer (210), wherein the method further comprises applying (310) an activator (212) along at least part of a second side of the continuous strip pattern (202).

8. The method according to claim 7, wherein the activator (212) is applied with a spray valve.

9. The method according to any of the preceding claims, wherein the adhesive (208) is applied with a pump dispenser comprising a dispense valve.

10. The method according to any of the preceding claims, wherein the adhesive (208) is an anaerobic adhesive.

11. The method according to any of the preceding claims, wherein the electrical sheet (200) is an electrical steel sheet or a soft magnetic compound (SMC).

12. The method according to any of the preceding claims, wherein a radial width of the rotor core or the stator core (205) is substantially larger than an axial length of the rotor core or the stator core (205).

13. An electric motor comprising a rotor core and/or a stator core (205) obtainable by the method according to any of claims 1 to 12.

14. An elevator hoisting machine comprising the electric motor according to claim 13.

15. An elevator comprising the elevator hoisting machine according to claim 14.
